Europäisches Patentamt

European Patent Office

Office européen des brevets

(19)

(11) Numéro de publication: **0 201 705**
**A1**

## (12) DEMANDE DE BREVET EUROPEEN

(21) Numéro de dépôt: **86104416.2**

(22) Date de dépôt: **01.04.86**

(51) Int. Cl.⁴: **G 01 M 10/00**
**F 04 D 13/12, F 02 B 13/08**
**F 03 B 17/06**

(30) Priorité: **03.04.85 FR 8505074**

(43) Date de publication de la demande:
**20.11.86 Bulletin 86/47**

(84) Etats contractants désignés:
**DE FR GB IT NL SE**

(71) Demandeur: **ALSTHOM**
**38, avenue Kléber**
**F-75784 Paris Cédex 16(FR)**

(72) Inventeur: **Chantrel, Paul**
**19 Lotissement Prévert**
**F-38113 Veurey(FR)**

(72) Inventeur: **Lecoffre, Yves**
**"Les Grands Champs" 9, rue de l'Oiseau**
**Le Versoud F-38420 Domene(FR)**

(74) Mandataire: **Weinmiller, Jürgen et al,**
**Lennéstrasse 9**
**D-8133 Feldafing(DE)**

(54) **Dispositif de mise en circulation d'eau, notamment dans un tunnel d'essais hydrodynamiques.**

(57) L'invention concerne la mise en circulation d'un débit important d'eau.

Plutot que d'utiliser un petit nombre de grandes pompes à hélice, il est préférable, par exemple dans un tunnel d'essais hydrodynamique (2), d'utiliser un grand nombre (cent) de petites pompes (6) de diamètres plus faibles.

Application aux grands tunnels d'essais hydrodynamiques.

FIG.2

EP 0 201 705 A1

Dispositif de mise en circulation d'eau, notamment dans un tunnel
d'essais hydrodynamiques

L'invention concerne la mise en circulation d'eau à travers une
section de passage d'aire importante telle que celle d'un tunnel ou d'un
canal d'essais hydrodynamiques. C'est-à-dire qu'elle vise à réaliser le
pompage d'un débit important sous une faible hauteur de refoulement,
donc avec une vitesse spécifique élevée. La vitesse spécifique en question est définie par l'expression

$$Ns = nQ^{1/2} / (gH)^{3/4}$$

dans laquelle n désigne le nombre de tours par minute d'une pompe g
l'accélération de la pesanteur, Q le débit de liquide exprimé en $m^3$/s
et H la pression de refoulement exprimée en m (mètres, de hauteur d'eau).
L'invention concerne le cas où cette vitesse spécifique est supérieure à
0,15 environ.

On connaît des dispositifs de pompage utilisés dans ces conditions
et comportant plusieurs pompes recevant et refoulant chacune une fraction du débit total traversant le dispositif. La direction d'écoulement
de celui-ci peut être appelée longitudinale. Chaque pompe comporte une
hélice entraînée en rotation autour d'un axe longitudinal par un moteur.
La vitesse de rotation est limitée par le risque de cavitation. La pompe
comporte de plus des surfaces de guidage s'étendant longitudinalement en
amont et en aval de ces hélices pour guider l'eau et conférer à la pompe
un rendement sensiblement maximal.

Dans certains de ces dispositifs connus le nombre de pompes est
très petit, et la tuyauterie commune qui guide le débit global comporte
un coude dont la paroi extérieure est traversée par l'arbre de l'hélice.
Cet arbre s'étend dans l'axe d'une branche du coude jusqu'à l'hélice. Il
est entraîné en rotation par un moteur extérieur à la tuyauterie. Ce
moteur est souvent muni (dans le cas de grosses pompes) d'un réducteur de
vitesse, parce que, si l'entrainement était direct, la vitesse de rotation qui permet un bon rendement du moteur conférerait aux pales de
l'hélice des vitesses excessives. Ces dernières provoqueraient des
phénomènes de cavitation et nuiraient ainsi tant au rendement
hydraulique qu'à la longévité de l'hélice.

Selon la demande de brevet japonais JP-A-58-201044 (Nishinihon Riyuutai Giken KK.22.11.83) (Patent abstracts of Japan vol 8, n° 51, P 259, 1488) le nombre des pompes peut être de quatre, les axes de ces pompes étant disposés aux quatre sommets d'un carré. Selon ce document plusieurs pompes de puissances modérées sont préférées à une seule de puissance plus grande dans le but de permettre de diminuer fortement le débit par arrêt total d'une partie des pompes, sans abaisser beaucoup la vitesse de rotation des pompes ou de la pompe restant en fonctionnement. Ceci permet, toujours selon ce document, d'éviter les fluctuations d'écoulement qui apparaîtraient si une pompe unique devait fonctionner à un débit trop fortement réduit. Quand un spécialiste a lu ce document, le choix d'un nombre de pompes égal à quatre lui apparaît explicable par le fait que le maintien en fonctionnement d'une seule pompe sur quatre, avec une vitesse de rotation éventuellement modérément réduite, permet de réduire le débit dans un rapport qui apparaît comme bien suffisant dans la pratique.

Ces divers dispositifs connus présentent notamment les inconvénients suivants

- Encombrement longitudinal et coût de construction des surfaces de guidage importants.

- Perte de rendement soit par mauvaise adaptation des vitesses de l'écoulement à l'entrée de la machine, soit par frottements à l'intérieur d'un réducteur mécanique, qui est de plus coûteux.

La présente invention a pour but de permettre de mettre de l'eau en circulation par exemple dans un tunnel d'essais hydrodynamique, de manière à obtenir notamment un faible encombrement et un faible coût du dispositif de pompage tout en conservant un bon rendement pour des valeurs variées du débit d'eau.

Elle a pour objet un dispositif de mise en circulation d'eau à débit réglable, comportant plusieurs pompes recevant et refoulant chacune une fraction du débit total traversant le dispositif selon une direction longitudinale d'écoulement et se succèdant selon au moins deux directions dans un plan transversal par rapport audit écoulement de manière à occuper sensiblement toute une section d'un tunnel hydraulique, chaque pompe comportant une hélice entraînée en rotation autour d'un axe longitudinal par un moteur à une vitesse limitée par le risque de cavitation, chaque pompe comportant en outre des surfaces de guidage s'étendant longitudinalement en amont et en aval de ces hélices pour guider l'eau et conférer à la pompe un rendement sensiblement maximal, ce dispositif étant caractérisé par le fait que le nombre N desdites pompes est choisi supérieur à dix et de préférence à vingt cinq de manière à diminuer l'encombrement longitudinal desdites surfaces de guidage dans le rapport $N^{1/2}$ (racine carrée du nombre N) environ, les moyens de réglage du débit d'eau étant des moyens de réglage simultané des vitesses de rotation de ces diverses pompes.

Selon la présente invention il est de plus apparu avantageux d'adopter, au moins dans certains cas, les dispositions plus particulières suivantes :

- L'hélice de chaque dite pompe est entraînée par ledit moteur sans interposition d'un réducteur mécanique de vitesse de rotation entre ce moteur et cette hélice.

- Lesdites pompes se présentent comme des éléments modulaires aisément remplaçables chacun en un bloc, et comportant chacun ladite hélice, ledit moteur, et des aubages fixes un convergent et un divergent constituant lesdites surfaces de guidage.

Le choix de la nature du dispositif selon l'invention est affecté de manière essentielle par les risques de cavitation des pompes.

On obtient les mêmes conditions de limite de cavitation pour des machines semblables, si les vitesses tangentielles de l'extrémité des pales sont égales.

Si    Vtg    =    vitesse tangentielle d'extrémité de pales

D    =    diamètre de la pompe

$\bar{n}$    =    vitesse de rotation de la pompe en radians par seconde

N    =    le nombre de pompes

1    =    indice de la grande pompe

2    =    indice des petites pompes

les deux égalités suivantes sont vérifiées :

$Vtg_1 = D_1 \cdot \bar{n}_1$ ,    $Vtg_2 = D_2 \cdot \bar{n}_2$

Il en résulte que : $D_1 \cdot \overline{n}_1 = D_2 \cdot \overline{n}_2$

Or : $N \cdot D_2^2 = D_1^2$ car l'aire de la section de pompage est conservée et il en résulte que : $\overline{n}_2 = \overline{n}_1 \cdot N^{1/2}$

Les petites pompes pourront donc avoir une vitesse de rotation supérieure.

Par exemple, pour $N = 100$ , $\overline{n}_2 = 10 \, \overline{n}_1$

Les petites pompes pourront donc être entraînées directement par un moteur, sans utilisation d'un réducteur comme c'est généralement le cas pour les grosses pompes.

La théorie de similitude montre aussi que, à hauteur de refoulement et à débit total inchangés les dimensions des surfaces de guidage optimales varient comme $N^{1/2}$.

A l'aide des figures schématiques ci-jointes on va décrire ci-après, à titre d'exemple non limitatif, comment l'invention peut être mise en oeuvre. Il doit être compris que les éléments décrits et représentés peuvent, sans sortir du cadre de l'invention, être remplacés par d'autres éléments assurant les mêmes fonctions techniques. Lorsqu'un même élément est représenté sur plusieurs figures il y est désigné par le même signe de référence.

La figure 1 représente une vue partielle de dessus avec arrachement partiel d'un dispositif de mise en circulation d'eau selon l'invention pour un tunnel d'essais hydrodynamiques.

La figure 2 représente une vue à échelle agrandie d'un détail de la figure 1.

La figure 3 représente une vue partielle à échelle agrandie du même dispositif, selon la flèche III de la figure 2.

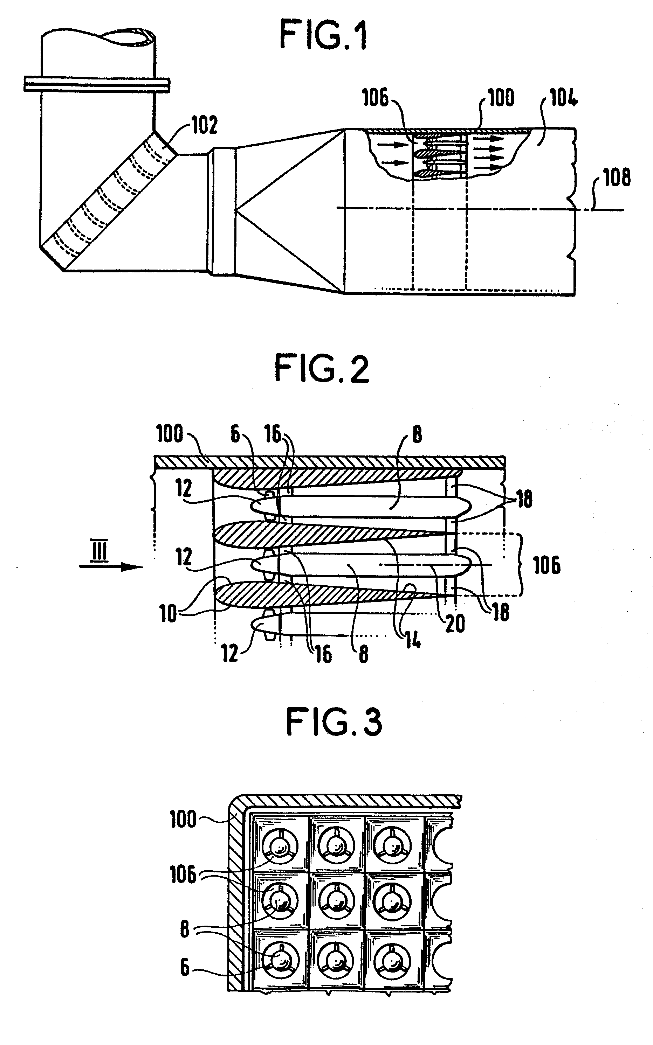

Selon la figure 1 un tunnel d'essais hydrodynamique 100 présente un coude 102. Dans la branche aval 104 sont disposées des pompes 106 tournant autour d'arbres parallèles à l'axe 108 de cette branche.

Conformément aux figures 2 et 3, ce dispositif comporte un grand nombre, par exemple 100, de petites pompes. Le nombre représenté est plus petit pour faciliter la compréhension du dessin.

Ces pompes occupent quasi entièrement une section du tunnel. Des surfaces de guidage auxiliaires non représentées simples sont disposées en amont de cette section à seule fin d'uniformiser l'écoulement.

Conformément à la figure 4 chaque pompe 106 comporte une hélice 6 de diamètre 0,26 m entraînée directement à 1000 tours par minutes par un moteur électrique ou hydraulique immergé 8. Bien entendu, dans certains cas particuliers, un même moteur pourrait être utilisé pour plusieurs hélices. Des surfaces de guidage principales 10, 12 et 14 permettent, avec l'aide de la forme convenable des pales de l'hélice et du choix de la vitesse de rotation, d'obtenir un rendement hydrodynamique sensiblement optimal. Ces surfaces de guidage principales s'étendent par exemple sur une longueur de 1 m. Des supports profilés 16 et 18 maintiennent l'ensemble de l'hélice et du moteur dans l'axe 20 de la pompe et servent éventuellement de redresseur pour les filets d'eau. Cet axe est quasi parallèle à la direction d'écoulement générale représentée pour la flèche 22 sur la figure 2. Ces supports permettent en même temps l'alimentation électrique ou hydraulique du moteur 8.

Chaque pompe présente la forme d'un module 106 représenté sur la fig.4.

Les avantages d'une telle disposition sont multiples.

a/ La longueur totale du dispositif de pompage est diminuée dans le rapport $N^{1/2}$. Dans le cas de 100 pompes, ce rapport vaut 10.

b/ Les ouvrages d'équi-répartition de débit dans ce dispositif, c'est-à-dire les surfaces de guidage, sont beaucoup plus simples à réaliser. Par ailleurs, du fait de la structure modulaire, le dispositif de pompage lui-même améliore la répartition de débit dans le tunnel et s'adapte mieux qu'une pompe classique à une mauvaise répartition du débit amont.

c/ Les composants de petites pompes sont des composants classiques, aussi bien en ce qui concerne les hélices que la tuyauterie ou les moteurs. Du fait de leur petite taille, ils peuvent être réalisés avec des matériaux adaptés à des problèmes spécifiques d'environnement.

d/ Le choix des moteurs conduit généralement à les intégrer à chacune des pompes. Selon le cas, ils peuvent être hydrauliques ou électriques. La disposition permet de les intégrer dans les bulbes placés dans l'écoulement (moteurs électriques immergés par exemple).

e/ Le bruit hydraulique est diminué en niveau. Sa fréquence est augmentée. Par ailleurs le bruit de chacune des pompes peut être décorellé de celui des autres.

f/ Etant donné le grand nombre de pompes, il n'est pas nécessaire d'intervenir systématiquement en cas de panne de l'une d'elles. Par ailleurs le remplacement peut être fait par modules.

g/ Il n'y a pas de réducteurs.

h/ Par rapport à la solution avec pompe unique, ou même quelques pompes, la solution du rideau de pompes permet d'obtenir, suivant le but recherché, soit :

- une veine liquide à vitesse bien uniforme

    - une veine liquide avec une carte de vitesses et des gradients de vitesses définis

    - une fraction de débit inverse au débit normal (courant de recirculation ou effet de giration dans le cas des propulseurs marins).

i/ Les conditions précédentes peuvent être réalisées dans les cas suivants :

    . veine noyée

    . veine à surface libre

    . écoulement stratifié (par exemple par un gradient de salinité).

Ces avantages compensent dans de nombreuses applications l'inconvénient constitué par le fait que le rendement global est légèrement inférieur à celui d'une pompe unique.

Les applications sont notamment les suivantes :

- Tunnels d'essais de cavitation.

- Stations de pompage à grand débit, faible hauteur.

- Propulseurs marins.

On peut remarquer que, dans les exemples d'applications précédents, on utilise des pompes, mais que le même dispositif en rideau est utilisable avec d'autres machines comme les turbines. C'est pourquoi la présente invention a également pour objet un dispositif d'exploitation d'énergie hydraulique, ce dispositif comportant plusieurs turbines recevant chacune une fraction du débit total traversant le dispositif selon une direction longitudinale d'écoulement, chaque turbine comportant une hélice 6 entraînant un générateur en rotation autour d'un axe longitudinal à une vitesse limitée par le risque de cavitation, chaque turbine comportant en outre des surfaces de guidage s'étendant longitudinalement en amont et en aval de ces hélices pour guider l'eau et conférer à la turbine un rendement sensiblement maximal, ce dispositif étant caractérisé par le fait que le nombre N desdites turbines est choisi supérieur à dix et de préférence à vingt cinq de manière à diminuer l'encombrement longitudinal desdites surfaces de guidage dans le rapport $N^{1/2}$ environ, ces turbines se succèdant selon au moins deux directions dans un plan transversal par rapport audit écoulement de manière à occuper sensiblement toute une section d'un tunnel hydraulique.

Ce dispositif n'est pas représenté spécifiquement, mais il peut être semblable à celui représenté sur les figures 1 à 3.

REVENDICATIONS

1/ Dispositif de mise en circulation d'eau à débit réglable, notamment dans un tunnel d'essais hydrodynamique, ce dispositif comportant plusieurs pompes (106) recevant et refoulant chacune une fraction du débit total traversant le dispositif selon une direction longitudinale d'écoulement (22) et se succèdant selon au moins deux directions dans un plan transversal par rapport audit écoulement (22) de manière à occuper sensiblement toute une section d'un tunnel hydraulique (2), chaque pompe comportant une hélice (6) entraînée en rotation autour d'un axe longitudinal (20) par un moteur (8) à une vitesse limitée par le risque de cavitation, chaque pompe comportant en outre des surfaces de guidage (10, 12, 14, 16, 18) s'étendant longitudinalement en amont et en aval de ces hélices pour guider l'eau et conférer à la pompe un rendement sensiblement maximal, ce dispositif étant caractérisé par le fait que le nombre N desdites pompes est choisi supérieur à dix et de préférence à vingt cinq de manière à diminuer l'encombrement longitudinal desdites surfaces de guidage (10, 12, 14, 16, 18) dans le rapport $N^{1/2}$ environ, les moyens de réglage du débit d'eau étant des moyens de réglage simultané des vitesses de rotation de ces diverses pompes.

2/ Dispositif selon la revendication 1, caractérisé par le fait que l'hélice (6) de chaque dite pompe est entraînée par ledit moteur (8) sans interposition d'un réducteur mécanique de vitesse de rotation entre ce moteur et cette hélice.

3/ Dispositif selon la revendication 1, caractérisé par le fait que lesdites pompes se présentent comme des éléments modulaires (106) aisément remplaçables chacun en un bloc, et comportant chacun ladite hélice (6), ledit moteur (8), et des aubages fixes (16, 18) un convergent (10) et un divergent (14) constituant lesdites surfaces de guidage.

4/ Dispositif selon la revendication 1, caractérisé en ce que le moteur (8) est un moteur électrique à vitesse réglable.

5/ Dispositif selon la revendication 2, caractérisé en ce que le moteur est un moteur hydraulique à vitesse réglable.

6/ Dispositif d'exploitation d'énergie hydraulique, ce dispositif comportant plusieurs turbines recevant chacune une fraction du débit total traversant le dispositif selon une direction longitudinale d'écoulement, chaque turbine comportant une hélice entraînant un générateur en rotation autour d'un axe longitudinal à une vitesse limitée par le risque de cavitation, chaque turbine comportant en outre des surfaces de guidage s'étendant longitudinalement en amont et en aval de ces hélices pour guider l'eau et conférer à la turbine un rendement sensiblement maximal, ce dispositif étant caractérisé par le fait que le nombre N desdites turbines est choisi supérieur à dix et de préférence à vingt cinq de manière à diminuer l'encombrement longitudinal desdites surfaces de guidage dans le rapport $N^{1/2}$ environ, ces turbines se succèdant selon au moins deux directions dans un plan transversal par rapport audit écoulement de manière à occuper sensiblement toute une section d'un tunnel hydraulique.

# FIG.1

# FIG.2

# FIG.3

### Office européen des brevets
### RAPPORT DE RECHERCHE EUROPEENNE

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | PATENTS ABSTRACTS OF JAPAN, vol. 8, no. 51 (P-259) [1488], 8 mars 1984; & JP - A - 58 201 044 (NISHINIHON RIYUUTAI GIKEN K.K.) 22-11-1983 * En entier * | 1,4,6 | G 01 M 10/00<br>F 04 D 13/12<br>F 03 B 13/08<br>F 03 B 17/06 |
| Y | FLIGHT INTERNATIONAL, vol. 88, 21 octobre 1965, pages 688-690, Londres, GB; J.A. KIRK "V/Stol wind tunnel" * Page 690, colonne de droite, lignes 16-39, colonne de gauche; figure et légende * | 1,4 | |
| A | FR-A-2 102 050 (SHELL) * Page 1, lignes 18-21; page 3, lignes 21-32; figures 1,6 * | 1-3 | |
| X | PATENTS ABSTRACTS OF JAPAN, vol. 6, no. 220 (M-169) [1098], 5 novembre 1982, & JP - A - 57 124 076 (MITSUBISHI DENKI K.K.) 2-08-1982 * En entier * | 6 | F 03 B<br>F 04 D<br>G 01 M<br>E 02 B |
| A | IDEM | 3 | |
| X | US-A-4 468 153 (ATENCIO) * Colonne 1, lignes 4-18; colonne 9, ligne 67 - colonne 10, ligne 21; figures 1,9 * | 6 | |

DOMAINES TECHNIQUES RECHERCHES (Int. Cl.4)

--- -/-

Le présent rapport de recherche a été établi pour toutes les revendications

| Lieu de la recherche | Date d'achèvement de la recherche | Examinateur |
|---|---|---|
| LA HAYE | 11-07-1986 | WALVOORT B.W. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82

0201705
Numéro de la demande

Office européen
des brevets

RAPPORT DE RECHERCHE EUROPEENNE

EP 86 10 4416

## DOCUMENTS CONSIDERES COMME PERTINENTS

Page 2

| Catégorie | Citation du document avec indication, en cas de besoin, des parties pertinentes | Revendication concernée | CLASSEMENT DE LA DEMANDE (Int. Cl.4) |
|---|---|---|---|
| Y | POWER, vol. 125, no. 12, décembre 1981, pages 87,88, New York, US; L. SHAFER et al.: "Hydraulic pump in reverse makes a good low-cost hydroturbine" * Page 87, colonne de gauche, lignes 1-12 * | 6 | |
| A | IDEM | 1 | |
| A | FR-A-2 395 406 (TRIAI) * Revendications 1,2; figures 1,2 * | 5 | |

DOMAINES TECHNIQUES RECHERCHES (Int. Cl.4)

Le présent rapport de recherche a été établi pour toutes les revendications

| Lieu de la recherche | Date d'achèvement de la recherche | Examinateur |
|---|---|---|
| LA HAYE | 11-07-1986 | WALVOORT B.W. |